# EUROPEAN PATENT SPECIFICATION

(11) **EP 4 022 481 B1**
(45) Date of publication and mention of the grant of the patent: **25.10.2023**
(21) Application number: 20768789.8
(22) Date of filing: 27.08.2020
(51) Int. Cl.: G06F 21/62, G06F 11/34

(54) **PROTECTING USER PRIVACY IN USER INTERFACE DATA COLLECTION FOR NATIVE APPLICATIONS**
BENUTZERDATENSCHUTZ IN EINER BENUTZERSCHNITTSTELLENDATENSAMMLUNG FÜR NATIVE ANWENDUNGEN
PROTECTION DE LA CONFIDENTIALITÉ DE L'UTILISATEUR LORS DE LA COLLECTE DE DONNÉES D'INTERFACE UTILISATEUR POUR APPLICATIONS NATIVES

(30) Priority: 28.08.2019 US 201962892914 P
(43) Date of publication of application: 06.07.2022
(73) Proprietor: FULLSTORY, INC., Atlanta GA 30309 (US)
(72) Inventor: MASTRACCI, Matthew, Atlanta, GA 30309 (US); WEBBER, Joel Grayson, Atlanta, GA 30309 (US); MIERS, Joshua L., Alpharetta, GA 30022 (US)
(74) Representative: Fish & Richardson P.C.
(86) International application number: PCT/US2020/048231
(87) International publication number: WO 2021/041700

(56) References cited:
- US-A1- 2015 149 645
- US-A1- 2016 147 397
- US-A1- 2016 267 523
- JORN FRANKE ET AL: "Real-time privacy-preserving cobrowsing with element masking", 2013 17TH INTERNATIONAL CONFERENCE ON INTELLIGENCE IN NEXT GENERATION NETWORKS (ICIN), 1 October 2013 (2013-10-01), pages 86-93, XP055129022, DOI: 10.1109/ICIN.2013.6670898 ISBN: 978-1-47-990980-3

## Description

### BACKGROUND

User interfaces facilitate user interaction with various resources and applications. For example, user interfaces generally include various interactive elements that enable a user to input data (e.g., using text boxes), make data selections (e.g., using radio buttons, check boxes, or drop down menus), navigate to resources or application pages (e.g., by interacting with an embedded link), and change visual aspects of the user interface (e.g., rotating a device, resizing a window, scrolling to other portions of a document, or using zoom controls). As user satisfaction with a given website or application can depend on the user's experience with the user interface, user sessions with user interfaces can be recorded and played back to publishers. Patent document US2015/149645 represents the closest prior art.

### SUMMARY

In general, one innovative aspect of the subject matter described in this specification can be embodied in methods that include providing, to a client device, configuration data specifying a set of whitelisted views of a publisher, each whitelisted view being a view from which content is eligible to be collected and transmitted from the client device; receiving, from the client device and for a user session in which a user interacted with one or more user interfaces of the publisher, user interface data including: view data specifying a structure of the one or more user interfaces presented during the user session; user interaction data specifying user interactions with the one or more user interfaces; and content of one or more first presented user interface elements that (i) were presented by the one or more user interfaces and (ii) were generated from a view that matches a whitelisted view specified by the configuration data, wherein the application does not provide content of one or more second presented user interface elements that were generated from a view that does not match a whitelisted view specified by the configuration data; and generating, based on the user interface data, playback of the user session that presents the one or more user interfaces, the content of the one or more first presented user interface elements, the user interactions with the one or more user interfaces, and, for content of the one or more second user interface elements, a masking element that represents the content of the second user interface. Other embodiments of this aspect include corresponding methods, apparatus, and computer programs, configured to perform the actions of the methods, encoded on computer storage devices.

These and other embodiments can each optionally include one or more of the following features. In some aspects, the view data includes, for each user interface, data specifying a hierarchy of views used to generate the user interface.

In some aspects, the content of a given first presented user interface element includes text presented by a given user interface of the one or more user interface and the masking element for the text includes a rectangular box that matches a size of a rectangle that bounds the text in the given user interface. The content of a given first presented user interface element can include text presented by a given user interface of the one or more user interface and the masking element for the text can include a rectangular box that having a height based on an ascent of the text.

In some aspects, the content of a given first presented user interface element includes an image presented by a given user interface of the one or more user interfaces and the masking element for the image includes a replacement image having a color that matches a given pixel of the image. The content of a given first presented user interface element can include an image presented by a given user interface of the one or more user interfaces and the masking element for the image can include a replacement image generated from a sample of pixels of the image, the sample of pixels being fewer than a total number of pixels of the image.

Some aspects can include detecting, during the playback of the user session, a user interaction with a user interface element being presented by at least one of the one or more user interfaces in the playback of the user session. In response to detecting the user interaction, a whitelist status of a given view used to generate the user interface element is changed. The whitelist status specifies whether the view includes content to be collected from the client device. Changing the whitelist status of the given view can include, whenever the given view is on a whitelist that specifies the whitelisted content, removing the given view from the whitelisted content and, whenever the view is not on the whitelist that specifies the whitelisted content, adding the view to the whitelist.

Some user interfaces, such as user interfaces of banking web pages or applications, present private data or other private content of the users who are interacting with the user interfaces. As this content is typically not useful in assessing the quality and functionality of the user interfaces and should not be presented to other parties, care should be taken to ensure that such content is not part of the playback.

Particular embodiments of the subject matter described in this specification can be implemented so as to realize one or more of the following advantages. The techniques described in this document protect users' privacy by preventing content, e.g., private or sensitive content, from being collected from the devices of the users while still collecting enough information to generate playback of user sessions that accurately reflects the way in which the user interface(s) was presented and the changes to the user interface(s) that occurred during the user sessions.

Text replacement techniques that use the size of an object that includes the text to properly size a masking element that represents the text during playback accurately reflects the way in which the text was presented without presenting the actual text. These techniques are more accurate and require less processing power and fewer computational resources to accurately size text replacements than techniques that replace the actual text with other text. Replacing text with non-textual representations further protects users' privacy relative to techniques that substitute other text for private text by precluding the ability to reverse such substitutions. Techniques described in this document for determining which objects to collect size information reduces the computational costs (e.g., in terms of resources, processing power, time, etc.) in obtaining the size information relative to techniques that obtain size information for all objects.

Providing configuration data specifying whitelisted content that should be collected to an application (e.g., a web browser or native application) when a user interface is loaded enables publishers to update the whitelisted content at any time without having to make programmatic changes to the code of the web page or native application. This enables quick and dynamic changes to the data that is collected without requiring time consuming and costly processes of generating, testing, and distributing updates. User interfaces described in the document can further simplify and increase the speed of this process by allowing publishers to simply select content that should be whitelisted or removed from the whitelist during playback of a user session.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which users interact with user interfaces.
FIG. 2A is an illustration of an example user interface presented during a user session.
FIG. 2B shows a portion of an example virtual document object model (DOM) for the user interface of FIG. 2A.
FIG. 3 is an illustration of an example interactive interface for replaying a user session.
FIG. 4 is a flow chart of an example process for generating and providing an interactive interface that presents playback of a user session.
FIG. 5 is a flow chart of an example process for updating a whitelist status of a user interface element.

Like reference numbers and designations in the various drawings indicate like elements.

### DETAILED DESCRIPTION

The techniques described in this document allow publishers to optimize their user interfaces (e.g., a web pages or application interfaces) so that users have a positive experience interacting with the user interfaces while also protecting the privacy of the users that view and interact with the user interfaces. As the need to protect user privacy has become a growing concern, these techniques are vital in any technology that touches user data. The techniques described in this document prevent user data from ever being collected or transferred from a user device, ensuring that the data cannot be intercepted during transmission or stolen from another device. At the same time, very specific data, such as data related to the structure of the user interface and the size of elements presented in the user interface, can be collected to recreate user sessions that accurately reflect the user interfaces presented to the users, the changes to the user interfaces that occurred during the user sessions, and the user interactions that occurred during the user sessions without showing actual user data.

For example, a website or mobile application of a bank shows customers their balances, transactions, and other data that is private to the user. The actual text showing the transactions and balances is not required in assessing the quality of the website or application and the customers would prefer that such data is not shared with a third party that collects user interface data for playback and analysis and that such data is not presented to the website or application publisher when viewing playback of the user session. The techniques described in this document prevent such data from being collected from the client devices and replaces the data in playbacks such that the playbacks accurately reflect the user interfaces viewed by the customer, but without the user's actual data. For example, such data can be identified when recording user interface at the client device and deleted or replaced with irreversible data before the data is sent from the client device. During playback, masking elements that can be in the form of wireframe objects can be presented in place of such data.

The techniques also give publishers fine tuned control over what data is collected during user sessions with their user interfaces. In general, a privacy by default approach can be taken such that all content of the user interface is excluded or masked and only structural data is collected during user sessions. Such a privacy preserving playback enables a publisher to see the end user's interactions with the application, but no sensitive on-screen data is collected, sent to a third-party, or presented to the publisher unless the data is explicitly unmasked by the publisher. A publisher can easily select content to be collected or blocked simply by interacting with (e.g., selecting) the content during playback or providing data specifying the content to be collected, e.g., by specifying specific views of the application to be collected. For example, if a retailer decides that it wants to view the quantity of items placed in a virtual shopping cart to view how users interact with a quantity selector and to assess the functionality of the quantity selector, the retailer can simply select the quantity selector during playback of one of the user sessions. When another customer subsequently views the same application page, the quantity of items selected using the quantity selector will be recorded for playback of that user session. The retailer can later stop the collection of the quantities simply by interacting with (e.g., selecting) the quantity selector again during the playback of a user session. This can all be handled on the back end (e.g., at the server) without the retailer having to make any programmatic changes to the web page or application.

Publishers (e.g., an entity that provides user interfaces, such as web pages and/or application interfaces) generally want to make user interfaces user friendly so that users will have a positive experience. Having information about user interactions with a given user interface (e.g., a web page or an application interface) and events that occur during user sessions with user interfaces can help a publisher quickly identify aspects of the user interfaces that can be changed to improve the user experience. These aspects can be identified using actual user interactions with the user interface, thereby eliminating the need to conduct external user surveys or rely on subjective feedback about the user interface. Rather, the users' actual recorded interactions with the user interface and/or classifications of these user interactions based on the characteristics of the interactions reveal areas of the user interface that can be changed to improve the user experience.

This document describes techniques for preventing the collection of specified content, e.g., content that may include sensitive or private data, while still enabling collection of detailed information about user interface elements that were presented at a client device, and information about which user interface elements users interacted with at the client device, to facilitate playback of user sessions. The sensitive or private data can be replaced in the playback of a user session with content having the same size such that the user interface(s) presented in the playback reflect the user interface(s) presented during the actual user session. For example, if the size of an element used to replace text is larger than the actual text, this can cause other user interface elements to be presented incorrectly, e.g., on top of one another or in incorrect locations on screen, which leads to an inaccurate representation of what was actually presented at the client device.

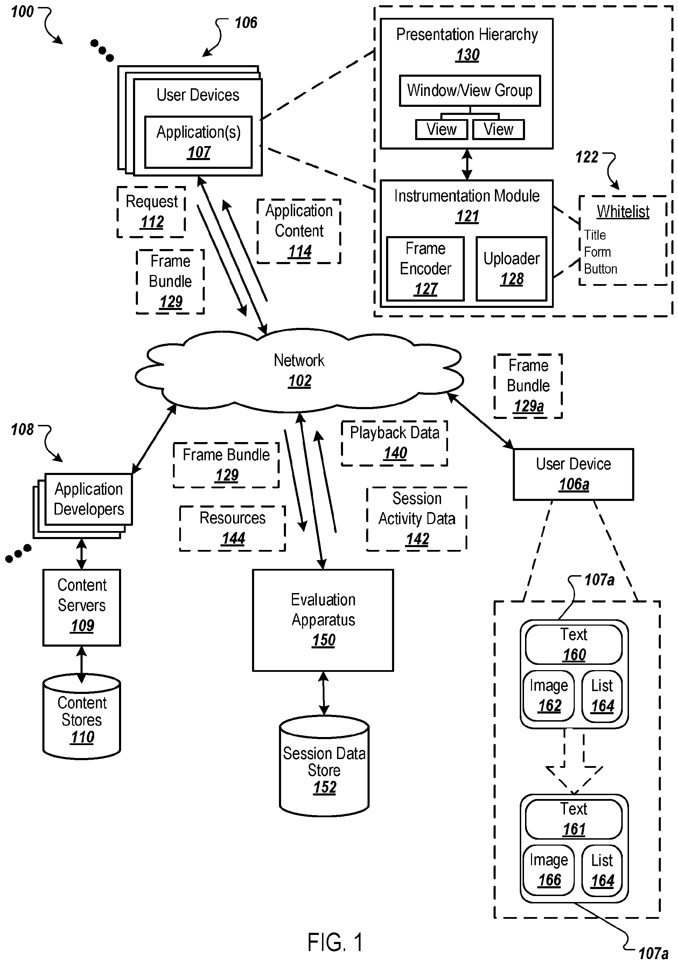

FIG. 1 is a block diagram of an example environment 100 in which users interact with user interfaces. The example environment 100 includes a network 102, such as a local area network (LAN), a wide area network (WAN), the Internet, a mobile network, or a combination thereof. The network 102 connects user devices 106, application developers 108, and an evaluation apparatus 150. The example environment 100 may include many different user devices 106 and application developers 108.

A user device 106 is an electronic device that is capable of requesting and receiving resources over the network 102. Example user devices 106 include personal computers, mobile communication devices, and other devices that can send and receive data over the network 102. A user device 106 typically includes a user application, such as a web browser, to facilitate the sending and receiving of data over the network 102. A user device 106 can also include other applications 107, such as native mobile applications that run on mobile devices. The mobile applications can include native applications developed for a particular platform or a particular device, e.g., applications developed for iOS^{™} and/or applications developed for Android^{™}.

An application 107 can submit content requests 112 to the application developer 108 that developed the application 107 over the network 102. For example, when a user opens the application 107, the application 107 can request images, text, videos, graphics, or other content to be presented by a user interface of the application. The application developer 108 can have one or more content servers 109 that provide application content 114 from one or more content stores 110 (e.g., memory storage devices, such as hard drives, flash memory, etc.) in response to the content requests. An application 107 can also store content at the user device 106. For example, text, images (e.g., of icons or logos), and other types of content that are typically presented each time (or at multiple times) the application 107 is opened can be stored at the user device 106 at which the application 107 is installed or executed. This content can either be stored temporarily or for as long as the application is installed at the user device 106.

An application 107 can include an instrumentation module 121 (e.g., instrumentation code) that collects, stores, and transmits data representing content presented by a user interface of the application 107 and user interactions with the user interface. While the application 107 is running, the instrumentation module 121 can collect the data and store the data at the user device 106. The instrumentation module 121 can compress the data (e.g., by encoding the data) and provide the data to an evaluation apparatus 150, e.g., periodically or based on the amount of data collected and/or compressed.

In some implementations, the instrumentation module 121 is a plug-in to application 107 that is launched when (or before) the application 107 is launched. Specifically, the instrumentation module 121 can be a separate application that is provided by a third-party (e.g., different from an entity that develops and provides the application) and collects the data representing the content presented by at the user interface while the application 107 is running on the user device 106. While running, the instrumentation module 121 can collect the data and store the data at the user device 106.

In some implementations, an application developer 108 (or another entity such as an entity associated with the evaluation apparatus 150) can cause the instrumentation module 121 to be launched by an application 107 by including a few lines of code in a build file for the application 107 (e.g., rather than having to instrument the source code of the application 107). For example, the code can identify where the instrumentation module 121 module can be found (e.g., a URL for the location of the instrumentation module 121) and/or code that instructs a build system to include the instrumentation module 121 in the application 107.

In some implementations, the instrumentation module 121 includes (or is in the form of) a library that is launched each time the application 107 is launched. For example, if the application 107 is an application that runs on iOS^{™}, the instrumentation module 121 can include an iOS^{™} library that is launched each time the application 107 is initialized at a user device 106. The developer can add the library to the application 107 and a reference to the library to the application's information property file (e.g., the application's plist in iOS^{™}) and the instrumentation module 121 can launch each time the application 107 is launched.

As described in more detail below, the instrumentation module 121 can download, from the evaluation apparatus 150 or another source, a whitelist 122 that specifies content that can be collected and provided to the evaluation apparatus 150 during a user session. The instrumentation module 121 can download the whitelist 122 each time the application 107 is launched so that the instrumentation module 121 uses the current whitelist and so that the whitelist 122 can be updated as frequently as needed without having to update code of the application 107. In some implementations, the only content that is recorded by the client device is content specified in the whitelist 122. Some content can be whitelisted by default, such as content that is always included in the application, e.g., logos or text that is not user-specific and instead is presented to all users of the application. Such content can be identified by analyzing the compiled code of the application. For example, the compiled code of the application can include references to images, text, or other content that is always displayed by the application or by particular application pages of the application.

Application developers can also add content to the whitelist, e.g., by adding, to the whitelist, particular views from which content should be collected. This enables the developers to identify content that is not sensitive and that would help in analyzing the user interface based on playback of user sessions that include the content.

The instrumentation module 121 can include various modules that collect data related to user interfaces presented by the application 107, encode and/or compress the data, and send the data to the evaluation apparatus 150. For example, as described in U.S. Patent Application No. 16/038,002, filed on July 17, 2018, an instrumentation module 121 can include a view scanner, data collectors, and a canvas recorder. These components can periodically collect data for a current frame of the application's user interface and store the data on a frame by frame basis. For the purposes of this document, a frame represents a state of the user interface at a given point in time. For example, the user interface can change as a user interacts with the application and each frame can represent the state of the user interface at a respective given point in time. In some implementations, each component can collect its data at given number of times per second. Each time data is collected, the combined data is for a particular frame of the user interface of the application and can be stored in a frame bundle 129 for the particular frame. A frame bundle 129 is a collection of data for a given frame and can include data that represents the content displayed by the user interface for a particular frame.

The view scanner, which can be a thread that is initialized when the instrumentation module 121 is launched, can obtain data from the presentation hierarchies 130 of the application 107. The presentation hierarchies 130 can be in the form of view trees. The view trees can include a hierarchy of view groups and individual views used to generate a user interface of an application. For example, a view may be a text view or an image view, and a view group may include multiple views such as a text view and an image view. Each view can specify a class that implements the view and attributes (e.g., dimensions, type or font of text, metadata, etc.) of the class for the particular instance of the class. The view scanner can identify, from the view tree for the application 107 at a given time, the views that are presented in the user interface of the application 107 and the contents of each view based on the data included in the view tree 130.

The view scanner can iterate through each of the top-level windows and iterate through each view attached to each window, e.g., in depth-first order. For each view, the view scanner can collect data such as the position on the screen of the view, alpha transparency of the view, view transform, and other appropriate data. As described below, the canvas recorder can capture the contents of each view.

For text views, the view scanner can collect the actual text presented by the text view, the size of each string of text (e.g., each line of text), and characteristics of the font of the text, e.g., the type, color, and/or size of the font. The view scanner can use one or more functions to get the size of a string of text. For example, in Android^{™}, the view scanner can use a getTextBounds method or similar function to obtain the size of a rectangle that bounds the string of text. This rectangle represents the height and width of the string of text. That is, the rectangle can extend in height from the bottom of the character that extends the lowest in the string of text to the top of the character that extends the highest in the string of text. The rectangle can also extend in width from the leftmost character to the right-most character. The view scanner can also use a measureText method or similar function to get the width of a string of text.

In some implementations, the view scanner can also use functions of the operating system to obtain the baseline and the ascent of each string of text in a text view. The baseline is a hypothetical line on which the characters of the string of text rest and the ascension is the distance from the baseline to the top of the tallest character. This can be used during playback to create a masking element that represents masked (e.g., non-whitelisted) text. For example, a box that represents text may be more aesthetically pleasing and a more accurate replacement of text if the box extends in height from the baseline a distance equal to the ascent rather than having a height equal to the ascent plus the descent (distance from baseline to the bottom of the lowest character).

The view scanner can also assign each view an identifier that uniquely identifies the view. This unique identifier can correspond to, e.g., be based on, the location that the view and its corresponding data is stored in memory.

The view scanner can also identify and discard clipped views, e.g., views that are not viewable or that are obstructed by other views. The view scanner 123 can identify the views that are completely obscured based on the size, location, and hierarchy of the views within the window. The view scanner can exclude data for completely obscured views as those views are not presented at the user device display and would not be required for accurate playback. This can reduce the amount of resources needed to collect and store the data, and reduce the amount of bandwidth consumed when sending the data over the network.

For each view that is tracked by (e.g., each view for which data is obtained by) the view scanner, the canvas recorder can obtain data describing the contents of the views that are displayed by the user device 106. In some implementations, the canvas recorder 125 is a subclass of a canvas class. For example, if the application 107 is an Android^{™} application, the canvas recorder 125 may be a subclass of the Android^{™} Canvas class that records data to a binary buffer internally. While a canvas subclass can be passed into a drawing method (e.g., onDraw() of Android), the application 107 may include some drawing logic scattered elsewhere, e.g., in other drawing methods such as dispatchDraw and/or drawChild methods of Android.

Draw methods can be instrumented with one or more reflection techniques at instrumentation time to capture drawing code of the methods so that the code can be used to determine what was drawn on the display using the draw method. For example, Android draw methods such as dispatchDraw and drawChild can be instrumented in ViewGroupRewriter by generating fsSuperDispatchDrawStub and fsSuperDrawChild. For example, the instrumentation module 121 can instrument ViewGroupRewriter using one or more reflection techniques at instrumentation time.

The instrumentation module 121 can also detect clicks (which for brevity is intended to include taps or presses on a touch screen throughout this document) and other user interaction, such as pointer movement, a user click, a user tap, a user swipe, a zoom, a scroll, a focus, or a text entry, at a user interface of an application 107. In Android^{™}, a click is anything that causes an OnClickHandler function to be triggered. In general, these functions are triggered in concert with a transition of the "pressed" state of a view from a false to a true or true to false. Thus, a click may be defined in instrumentation code as a transition of the pressed state in either direction.

In another example, as described in U.S. Patent Application No. 16/370,574, filed on March 29, 2019, an instrumentation module 121 can include a view scanner (which can include a window scanner and a PDF scanner), and an event detector. The window scanner can obtain data specifying the structure and layout of a user interface of the application. The window scanner can obtain this data periodically so that the data can be used to playback the user session. The data can include data specifying the layout of windows and views of the windows (e.g., the location of each window and view on screen) and attributes of the windows and views (e.g., one or more classes used to generate the view and attribute(s) of the class(es) such as dimensions, type or font of text, metadata, etc.).

In iOS^{™}, a view is an object that generates a visual representation of itself within a portion a user interface, e.g., within a window of the user interface. Each window can include one or more views. Each view can include a geometric-shaped area (e.g., a rectangle) of the window in which the view generates the visual representation. A view can generate a visual representation of itself on the user interface using one or more drawing operations that draw text, images, video, or other content to the user interface.

In some implementations, the window scanner obtains, for each window, one or more presentation hierarchies 130 that each specifies the hierarchy of presentation objects (e.g., views and/or layers) used to generate the window of the user interface. As used herein, a presentation object is an object of a native application that loads (e.g., draws content) and optionally detects user interaction events (e.g., a mouse click or touch event within the object). Example presentation objects in iOS^{™} include views and layers.

The window scanner can obtain, for each window, data specifying a hierarchy of presentation objects. For example, the window scanner can obtain, for each window, data specifying a hierarchy of views (e.g., a view tree) and/or data specifying a hierarchy of layers (e.g., a display layer tree). A window or view can include sub-views arranged in a tree-like hierarchy with the window being the root of the tree. For example, a view can include a sub-view with text and another sub-view that includes an image. Each view can also be associated with one or more layers that are arranged in a hierarchy. In some implementations for native applications that run on iOS^{™}, the window scanner can obtain the data specifying the structure and layout of the views from the UIView class. The window scanner can also assign each view an identifier that uniquely identifies the view. This unique identifier can correspond to, e.g., be based on, the location that the view and its corresponding data is stored in memory.

The window scanner can use the presentation hierarchies to identify drawing operations used to generate the presentation objects that use drawing operations. In some implementations, the window scanner causes each presentation object (e.g., view and/or each layer) to draw itself to an offscreen drawing context, offscreen buffer, or other offscreen location. In some versions of iOS^{™}, drawing operations are generally performed in a PDF-like object in Core Graphics called a context. A context represents drawing destinations and contains the information that the drawing system needs to perform any subsequent drawing commands. Each presentation object can draw itself to an onscreen context that is presented on the display of the user device 106.

The window scanner can cause each presentation object to also draw itself to a PDF graphics context that is not presented on the display of the user device 106. The PDF graphics context is a context supported by iOS^{™}. The window scanner 124 can cause a view or layer to draw itself to the PDF graphics context by submitting a request to the view to draw itself to the PDF graphics context. As the views and/or layers draw themselves to the PDF graphics context, a PDF document is generated that includes the data for each drawing operation used to draw the presentation objects. For example, when a particular view or layer draws itself to the PDF graphics context, the Core Graphics PDF engine of iOS^{™} translates the drawing operations for the particular view or layer into PDF commands. The PDF engine can store the translated PDF commands in the PDF document.

The window scanner 124 can create a new PDF document each time the window scanner iterates through a presentation hierarchy. For example, the window scanner 124 can obtain the structure and layout of the user interface (e.g., the view tree and/or display layer tree) periodically based on a specified time period (e.g., every 200 milliseconds, every 300 milliseconds, or another appropriate time period). The view tree and/or layer tree for each period represents a frame (or snapshot) of the user interface at a given point in time. For the purposes of this document, a frame represents a state of the user interface at a given point in time. For example, the user interface can change as a user interacts with the application and each frame can represent the state of the user interface at a respective given point in time.

The window scanner can iterate each window of the user interface and, for each window, the presentation hierarchy of the window and generate a PDF document for each obtained user interface structure. In this way, the window scanner 124 can generate, for each frame of the user interface, a PDF document that represents the frame (but does not store a screenshot of the user interface) during a user session. Storing and compressing data for drawing operations rather than bitmaps or pixel data of actual screenshots can significantly reduce the amount of memory used to store the data and the amount of bandwidth used to transmit the data from the user device 106 to the evaluation apparatus 150.

The PDF document for a frame can include a list of drawing commands used to generate the user interface at the given point of time represented by the frame. In some implementations, the window scanner can mark boundaries between presentation objects (e.g., view and/or layers) in a PDF document using markers at the beginning and end of each object's drawing commands. For example, before a particular presentation object draws itself to the PDF graphics context, the window scanner can write, to the PDF document, a unique marker that signals the start of the drawing commands for the particular presentation object. Similarly, after the last drawing command for the particular presentation object is recorded in the PDF document, the window scanner can write, to the PDF document, a unique marker that signals the end of the drawing commands for the particular presentation object. The PDF can also include a text matrix that specifies the location of each string of text in each view.

In some implementations, the window scanner creates a new PDF page for each view. For example, rather than use begin and end markers as described above, the window scanner can cause the Core Graphics PDF engine to begin a new PDF page to mark the boundaries of each presentation object in the PDF document. In this example, the PDF document for a frame can include a page for each presentation object of the frame.

In some implementations, the window scanner can also identify and discard clipped presentation objects, e.g., views or layers that are not viewable or that are obstructed by other views or layers. For example, an application 107 may have a number of layered views onscreen at a given time. In some cases, large portions of the view tree are completely obscured by other portions of the view tree. The window scanner can identify the presentation object that are completely obscured based on the size, location, and hierarchy of the presentation objects within the window. For example, if two presentation objects overlap on the display and one is in front of the other based on the hierarchy, the one in back would at least be partially obscured. The window scanner can exclude data for completely obscured presentation objects as those presentation objects are not presented at the display of the user device and would not be required for accurate playback. If a presentation object is partially obscured, the window scanner can include data for the presentation object or for the portion that is viewable.

The PDF scanner can analyze the generated PDF document and identify the corresponding drawing operations for each presentation object (e.g., for each view or layer). For example, the PDF scanner can use the markers in the PDF document to determine which drawing operations correspond to each presentation object. For each presentation object, the PDF scanner can identify in the PDF document the begin marker and the end marker for the presentation object. The PDF scanner can assign each drawing operation in the PDF document between the begin marker and the end marker to the presentation object and store data, e.g., in the FlatBuffer that maps each drawing operation to its corresponding presentation object.

The window scanner can assign a unique identifier and/or timestamp information (or sequential ordering information) to each frame. The timestamp information can represent an actual time at which the user interface represented by the frame was presented at the display of the user device 106. The sequential ordering information can represent when the frame was presented relative to other frames presented during the user session. Each presentation object presented in the frame and/or each event detected in the frame can also be assigned by the window scanner, the unique identifier and/or a corresponding timestamp or sequential ordering information so that the presentation objects and events for each frame can be presented in the correct order during playback.

In some implementations, the PDF scanner uses glyph mapping techniques to determine the text presented by drawing operations in the PDF documents. For example, the text showing operations for PDFs can use placeholder characters that do not represent the exact Unicode characters. To retrieve the actual Unicode character that was drawn to the PDF document, the PDF scanner can parse the embedded character map (e.g., CMap) that is stored with a subsetted font in the PDF document. This character map can take various forms specified by the PDF and CMap specifications. The PDF scanner can provide the data for each text drawing operation to the window scanner for association with the presentation object in which the text was drawn.

The PDF scanner can also use width mapping techniques to determine the actual printed widths of the fonts of text presented by drawing operations in the PDF documents. The PDF scanner can parse a list of character widths from the embedded fonts in the PDF document to determine the actual printed widths. In some cases, the text showing operations for PDFs do not explicitly use spaces. Instead, a space is created by using an abnormally large inter-character gap between characters. The instrumentation module 121 can write fonts to a test PDF at startup (e.g., when the application 107 is launched) to measure this inter-character gap and cache it for future use by the PDF scanner as a space-detection threshold.

In some implementations, the instrumentation module 121 can use method swizzling techniques to track image provenance from the resource level (e.g., images may be cropped or tinted from their original forms), tracking user input events (e.g., touches, button clicks, etc.), and implementing instrumentation code for web views. Method swizzling can be used in Objective-C^{™} applications and involves switching method implementation pointers at runtime to either swap or shim implementations of framework or user code. In general, a shim is a library that can intercept messages or calls (e.g., API calls) and handles the call itself or redirects the call elsewhere.

The instrumentation module 121 can swizzle a set of methods used for drawing images, processing user input events, and/or other appropriate methods. For example, the instrumentation module 121 can access a list of methods to be swizzled when the application 107 is launched. The instrumentation module 121 can determine whether the application 107 uses any of the methods in the list and, if so, swizzle the methods of the application 107 that match the methods in the list.

Swizzling can be used to reduce the amount of memory storage and bandwidth used to store images presented by the application 107 and to transit the images to the evaluation apparatus 150. Swizzling can reduce the number of times an image that may be presented multiple times by the application 107 is uploaded to the evaluation apparatus 150. For example, an image can be uploaded once, e.g., when the application 107 is initialized on the user device 106 for the first time. Thereafter, a placeholder identifier for the image can be used to reference the image rather than uploading the image each time a drawing operation draws the image to the PDF graphics context.

In iOS^{™}, images may pass through a number of different transformations on the way to being loaded to being drawn on-screen. For each transformation operations (including images that may not be sourced from assets), the window scanner 124 can read old provenance metadata from the incoming image and add new provenance metadata to the old provenance data. In this way, the window scanner 124 can create a chain of metadata that can be read from an image. The provenance data can indicate the source of the image (e.g., web address for the image) and data specifying any adjustments made to the image (e.g., cropping, tinting, etc.).

In some implementations, the instrumentation module 121 can use method swizzling to identify when the existing drawn information in a view or a layer has been invalidated. The instrumentation module 121 can identify and swizzle view invalidation methods to determine when a view is requesting to be redrawn. For example, each invalidated view may be redrawn at each drawing cycle. If a view has not been invalidated, the view may not need to be redrawn. By swizzling the invalidation methods for the views, the instrumentation module 121 can determine which views are to be redrawn during the next drawing cycle. The window scanner can use this information to skip scanning a view for views in which the view display information has not been invalidated as this indicates that the view has not changed. By skipping unchanged views, the amount of data encoded and transmitted over the network 102 is reduced.

The event detector can detect user interface events (e.g., taps, touches, swipes, etc.) that occur on the user interface of the application 107 using a gesture and/or tap recognizer class. For example, the event detector can use the UIGestureRecognizer and/or UITapGestureRecognizer classes to detect occurrences of user interface events, e.g., by swizzling these classes. Data for the events can be stored with the frame(s) in which the event occurred. This data can include the event itself, the sender of the event, the target of the event, and the action to be performed in response to the event. The data can also include timestamp information so that the data for the events can be coordinated with other data, e.g., during playback of the user session. The data can also include a selector path (e.g., the full selector path) for the event. The selector path can specify each presentation object in a presentation hierarchy that includes the presentation object that drew the object on which the event occurred.

To obtain the selector path for an event, the event detector 126 can intercept certain methods, such as the sendAction method of iOS^{™}. The sendAction method includes parameters including the UIEvent object that includes information about the event that initiated the action message, the sender object that is sending the message (e.g., the UIControl object that invoke the sendAction method), the target object that is to receive the action message, and a selector identifying an action method. The sender object is typically the object (e.g., button) touched or selected by a user. The event detector 126 can walk up from the sender object and build a selector path that includes each presentation object in the presentation hierarchy that includes the presentation object that drew the sender object. The event detector 126 can store the data for each event (including the event itself, the sender object, the target object, and the selector path) and provide the data to the frame encoder 127.

The instrumentation module 121 can map selectors for events and selectors for presentation objects to corresponding virtual HTML elements. For example, the instrumentation module 121 can attempt to map view classes and attributes (for events and view trees) to corresponding virtual HTML elements. In some implementations, the instrumentation module 121 maps the iOS^{™} attribute "accessibilityIdentifier" (which associate a unique identifier with elements in a user interface) to the HTML attribute "id" (which specifies a unique identifier for an HTML element). The instrumentation module 121 can also map the iOS^{™} attribute "accessibilityLabel" (which is a label for the accessibility element) to the HTML element "label" (which represents a caption for an item).

The instrumentation module 121 can also generate attributes to include in a selector for a presentation object. For example, if the presentation object is part of an iOS^{™} storyboard, the instrumentation module 121 can generate an attribute "tag" that is an integer that identifies a view object and an attribute "storyboard" attribute that specifies the storyboard in which the view was created. For example, the virtual selector for a class named "MyCustomLabel" that comes from the "Main" storyboard might have a virtual selector that looks like:
"MyCustomLabel#name_label[story_board="Main"] [tag="1"] [label="Full name"]". By mapping iOS^{™} attributes to HTML elements, the events and views can be indexed with the virtual HTML elements so that users can search for particular types of events and retrieve playback data for user sessions in which the events occurred. Using virtual attributes in this way enables the instrumentation module 121 can generate a virtual DOM that is an emulated view hierarchy. Each view in the mobile hierarchy is mapped to a virtual HTML-like element, with attributes from certain native mobile APIs. The virtual element's tag name can be mapped from the class name of the view in the mobile platform. For example, the UITextView in an iOS^{™} app can create a virtual element with a tag name that looks like "<UITextView ... >". For an Android^{™} TextView, the instrumentation module 121 can create a virtual element with a tag name of "TextView." Android^{™} classes can include the Java package of the view in an attribute named "package." The virtual element for a "TextView" could look like "Text View package="android.widget ...>". The selector rules that would match the above views are:
"TextView[package="android.widget"]" and "UITextView" based on the mapping.

Because mobile applications do not generally have custom attributes on views, a number of pseudo-attributes can be created. However, these may not be sufficient for end users. A solution to this is a set of APIs that allow application developers to add attributes and classes to the view hierarchies for their mobile applications and to rename the emulated tag names or views. The virtual attributes seamlessly integrate with other selectors, e.g., those for web pages.

The virtual attributes can be recorded during user sessions as part of the structural data that is collected during the user session, e.g., as part of the view trees. This enables publishers to search for user sessions in which particular views and/or user interface elements with particular attributes were presented. This can also enable publishers to specify particular attributes or views for exclusion or masking rules included in a whitelist for the application.

As mentioned above, the instrumentation module 121 can download a whitelist 122 that specifies content that can be collected and provided to the evaluation apparatus 150 during a user session. The whitelist 122 can specify user interface elements, e.g., views, for which content can be collected and sent to the evaluation apparatus 150. For example, the whitelist 122 can specify a set of views in Android^{™} and iOS^{™} implementations. In some implementations, the whitelist 122 includes a set of rules. The rules can include exclusion rules and masking rules. An exclusion rule can specify whether a view (and its subtree) is to be completely removed from the data sent to the evaluation apparatus 150. A masking rule can specify whether content is to be replaced with an irreversibly-transformed (or at least difficult to reverse) representation of the content, e.g., a hash of masked text or blurred or single color image for masked images. If content is to be masked, the instrumentation module 121 can mask the content prior to sending it to the evaluation apparatus 150 such that the actual on-screen content is never sent to the evaluation apparatus 150. This allows masked and recorded views to be nested in one another in a way that is not possible with excluded views.

In some implementations, the whitelist 122 specifies the identifiers of the views that are excluded, masked, and/or unmasked. These identifiers can be, for example, the names of the classes (or other objects) that are used to generate the views. For example, if a particular class is considered by a publisher to never contain sensitive information, the publisher can include the name of the class in the whitelist for the application. The whitelist can specify other programming objects that can be used to create views or particular portions of views from which content can be collected for presentation during playback. This can provide finer-grain control over what content is collected and what content is masked or excluded. For example, the instrumentation module 121 can apply the rules to views, layers, other elements in the view trees, particular drawings commands or functions, and/or other group of presentation objects that cause the applications to draw content to the screen during a user session.

The application developers 108 can specify the whitelist 125 for the user interfaces of their applications. For example, an application developer 108 can select the views from which content can be collected and provided to the evaluation apparatus 150 from user devices 106. In some implementations, the application developer 108 can generate a whitelist for its user interfaces and provide the whitelist to the evaluation apparatus 150. An application developer 108 can also specify user interface specific whitelists. For example, the whitelist for a home page can be different from the whitelist for an account overview page. As described in more detail below, the application developer 108 can generate and update its whitelist(s) by interacting with the playback of user sessions with its user interfaces.

In some implementations, a blacklist can supersede the whitelist. For example, if a blacklist specifies that content within a particular view cannot be collected and sent to the evaluation apparatus 150, the application instrumentation module 121 will not send content included in the views nested in the blacklisted view even if the nested views are whitelisted. Each application developer 108 can specify one or more whitelists and one or more blacklists for its user interfaces.

When recording data of a user session, the instrumentation module 121 can compare each view (e.g., the identifier for the view) being presented during the user session to the whitelist 122 and/or its rules to determine whether the content of the view can be sent to the evaluation apparatus 150. If the view is excluded, the view and its subtrees can be removed from the data, e.g., before the frame bundles 129 (described below) are generated. If the view is masked, the instrumentation module 121 can transform the content of the view and replace the content with the transformed version of the content, such that the actual on-screen content is not sent to the evaluation apparatus 150.

For text of masked views, the instrumentation module 121 can generate a representation of the text that does not reflect the actual content of the text that was presented during the user session. For example, the instrumentation module 121 can use a hash function to generate a hash of text that is to be masked. In this way, the same text results in the same hash and can be used to interpolate between frames, as described below. In another example, random text can be used as the placeholder of text presented in a view that is to be masked. In another example, replacement text may not be included as the size of each text string can be used to generate a masking element for each text string, as described below.

The instrumentation module 121 can also flag the representations of text that is to be masked using a masking flag. For example, the instrumentation module 121 can include a masking flag in the data for the view that includes the text. This enables the evaluation apparatus 150 to determine which text is a representation of other text and present a masking element (e.g., a bar) in place of the text.

For images of masked views, the instrumentation module 121 can generate a replacement image or a replacement set of pixels and corresponding colors to represent the image. In general, the instrumentation module 121 can generate a low-fidelity representation of the image to fill the image's presentation space without allowing a views to distinguish the actual content of the image. For example, the instrumentation module 121 can evaluate the image to identify a dominant color in the image. This dominant color may be the color of the largest number of pixels of the image. The dominant color can also be identified using an algorithm, e.g., using a histogram of the colors in the image. The instrumentation module 121 can replace the image with a bitmap (or other image representation) of pixels all having the dominant color.

In another example, the instrumentation module 121 can sample a specified number of pixels of the image and generate a replacement image or representation of the image using the sampled pixels. For example, the instrumentation module 121 can sample nine (or another number) of pixels of the image that is to be masked and generate a 3x3 bitmap using the nine pixels. In this example, the pixels can be arranged in the 3x3 bitmap in the same arrangement of the image to be masked. That is, the top left pixel of the bitmap can correspond to the top left sampled pixel of the image to be masked, the top center pixel of the bitmap can correspond to the top center sampled pixel of the image to be masked, and so on. In this way, the bitmap can be scaled to the size of the masked image during playback and would provide some indication of the content of the image, without presenting any private or sensitive content. With either form of masking, the instrumentation module 121 can replace the actual image with the masked representation in the drawing operation for that image.

For masked images, the instrumentation module 121 can include, in frame bundles 129 or other data sent to the evaluation apparatus 150, data specifying that the image is a masked representation of an image presented during the user session. For example, this data can be a masking flag set with the drawing operation or the representation of the image. During playback, the evaluation apparatus 150 can detect the masking flag (or other data) and generate a masked version of the image in its corresponding location during playback. For example, the evaluation apparatus 150 can scale the pixel(s) to a masked image that is the same size as the image that it represents and present the masked image in the same location that the image was presented during the user session.

This technique can also be used for whitelisted images, e.g., in cases in which bandwidth is limited. To conserve bandwidth, a single pixel or a sampling of a few pixels can be sent instead of the image. When bandwidth improves, the instrumentation module 121 can send the actual whitelisted images to the evaluation apparatus 150. In this example, the masking flag can be used by the evaluation apparatus 150 to determine whether the actual image may be available, e.g., received in a later transmission. If the masking flag is not set, indicating that the image is not masked (e.g., included in a whitelisted view), the evaluation apparatus 150 can then determine whether the actual image was received in a later transmission. As the actual images may not be needed for accurate playback or to analyze the quality of the user interfaces, this can be used all the time, not just when bandwidth is limited.

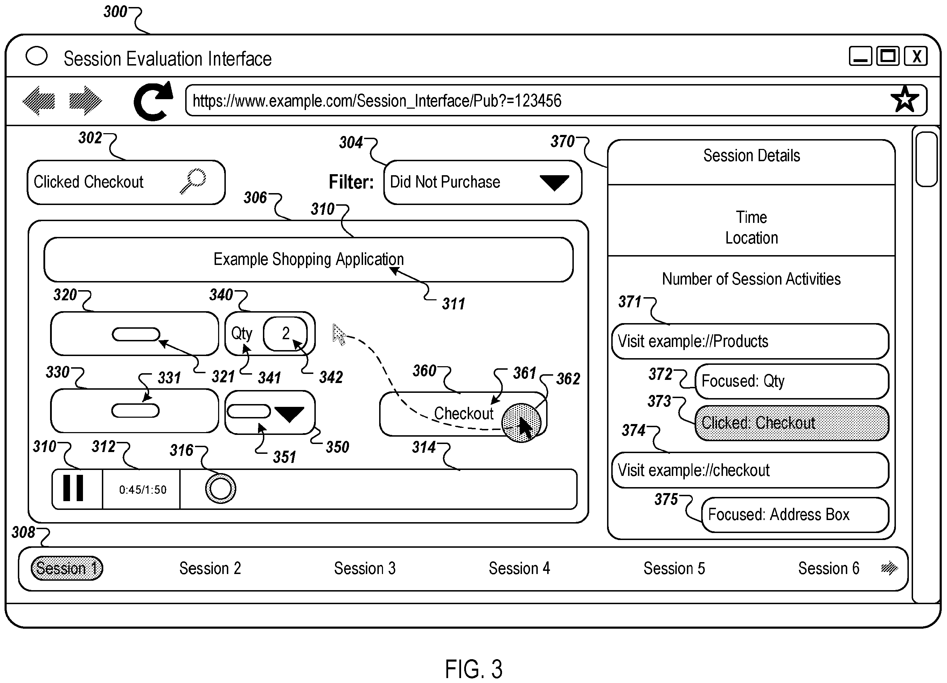

In some implementations, the instrumentation module 121 can identify text in images e.g., using optical character recognition techniques. If an image in a non-whitelisted view includes text, the instrumentation module 121 can mask the text using a hash or random text, as described above. The instrumentation module 121 can also determine the location of the text and include the location information in the frame bundle 129. During playback, a masked representation of the text can be presented in the image where the original text was presented. In a particular example, non-whitelisted content can be presented similar to a wireframe, as shown in FIG. 3.

The instrumentation module 121 can use techniques to reduce the amount of computational resources needed to collect and process data that will be sent to the evaluation apparatus 150. For example, the instrumentation module 121 can monitor the views during the user session to determine whether any of the views become invalidated, meaning that the content of the views have changed and need to be redrawn on the screen. If a view is not invalidated, the instrumentation module 121 can avoid generating masked representations of the content of any non-whitelisted views as the content of the views are the same until they become invalidated.

The instrumentation module 121 includes a frame encoder 127 and an uploader 128. The frame encoder 127 can receive data from the other modules and generate frame bundles 129 that include the data or a compressed version of the data. Each frame bundle 129 can include data for one or more frames. The frame encoder 127 can encode and/or compress data for frames prior to transmitting the data to the evaluation apparatus 150. For example, the frame encoder 127 can encode the data for each frame bundle 129 using binary encoding. The frame encoder 127 can store each frame bundle in a FlatBuffer format. The frame encoder 127 can send each frame bundle 129 to the uploader 128. In turn, the uploader 128 transmits the frame bundles 129 to the evaluation apparatus 150 over the network 102.

The evaluation apparatus 150 can store each frame bundle 129 in a session data store 152 and use the data to generate playback data 140 and session activity data 142, as described below. The evaluation apparatus 150 can also index the frames and user interface events of each frame so that users (e.g., application developers 108) can search for user sessions in which particular events occurred. For example, each event can be indexed with the selectors and data describing the event. In this way, a user can search for events in which particular objects (e.g., buttons) were selected as the objects are part of the selector path for the event.

The evaluation apparatus 150 receives the frame bundles 129 from the user device and generates, for each user session, playback data 140 and session activity data 142 for the user session. The evaluation apparatus 150 can provide the playback data 140 and the session activity data 142 to the application developer 108 that developed the application 107 at which the user session occurred.

The playback data 140 presents the application developer 108 with visual changes to an application 107a during the user session and other user activity (e.g., mouse movements) that occurred during the session. At least a portion of the visual changes to the application 107a correspond to changes in presentation hierarchies and the content presented for each presentation object of the presentation hierarchy during the user session. For example, the playback data 140 can show the application developer 108 pointer (e.g., mouser or finger) movement over the application 107a, a user click (including a tap or press) on an item from the list 164, and the replacement of the image 162 with the image 166. In this example, the replacement of the image 162 with the image 166 can correspond to change of an image view from presenting the image 162 in one frame to presenting the image 166 in a subsequent frame. Similarly, the replacement of text 160 with text 161 can correspond to a change in a text view of the view tree from presenting text 160 in one frame to presenting the text 161 in a subsequent frame.

The session activity data can present to the application developer 108 a list of events that occurred during the user session. For example, the list of events can specify that two events Ev1 and Ev2 occurred during the user session. Ev1 can correspond to the initial loading of the application 107a, and Ev2 can correspond to the click on the item from the list 164. As playback of the user session is presented (e.g., showing mouse movements and visual changes) the list of events can be highlighted to show which event corresponds to the visual changes that are being presented by the playback data. For example, upon initial playback of the user session, Ev1 can be highlighted indicating that the visual representation of the application 107a corresponds to the initial loading of the application 107a. Once playback of the user session reaches the point where the user clicked on the item from the list 164, Ev2 can be highlighted indicating that the replacement of the image 162 with the image 166 corresponds with the click on the item from the list 164. As discussed in more detail below, the session activity data can also include contextual data corresponding to the user click on the item from the list, e.g., text of the clicked item, which changes to the application 107a correspond to the user click, and/or requests for other application user interfaces that occurred during the user session.

The event evaluation apparatus 150 can create playback data 140 for a user session using the data in the frame bundles 129 received for the user session. In some implementations, the event evaluation apparatus 150 creates the playback data 140 by redrawing each frame of the user session using the data specifying the layout and structure of the presentation objects (e.g., views and/or layers) in the frame, the drawing operations used to generate each presentation object of the frame, and the events that occurred during the presentation of the user interface represented by the frame. For example, the event evaluation apparatus 150 can draw a frame by identifying each presentation object for the frame and rendering each presentation object in the canvas based on the drawing operations used to generate each presentation object as specified by the data in the frame bundle 129 for the frame. In a particular example, the evaluation apparatus 150 can use the timestamp information for the drawing operations to process each drawing operations in order and recreate the presentation objects based on the drawing operations. For example, if a first drawing operation is to present an image in a first location and a second drawing operation is to present a text caption in a second location below the image, the evaluation apparatus 150 can process these drawing operations to draw the image in a location that corresponds to the first location and to draw the text caption in the second location.

For example, if the presentation hierarchy for a frame includes a text view that includes text, the evaluation apparatus 150 can identify the text view and its display position from the view tree data and identify the text from the text table of the frame bundle and the identifier for the text. If the text was rendered with a custom font, the evaluation apparatus 150 can also use the typeface assigned to the text to render the text in its custom font. The evaluation apparatus 150 can then draw the text on the canvas using the data. The evaluation apparatus 150 can render other types of views, e.g., image views in a similar manner.

The evaluation apparatus 150 can identify representations of non-whitelisted text in text views. For example, the evaluation apparatus 150 the identify a masking flag in the view tree data that includes the text data and determine, based on the masking flag, to present a masking element in place of the representation of the text. In another example, the evaluation apparatus 150 can detect hashes of text and determine, in response to a hash, present a masking element in place of the hash.

The evaluation apparatus 150 can generate a masking element based on the size information for each string of text (if available) or the text matrix for a PDF. For example, the evaluation apparatus 150 can generate, for each string of text, a box that matches the size of a rectangle that bounds the actual text string that was presented during the user session. In another example, the evaluation apparatus 150 can use the width of a text string that was presented during the user session and the baseline and ascent information to generate a box that has a width equal to the width of the text string and a height equal to the ascent and placed at the baseline. In some implementations, the masking bar can have rounded edges can be presented in the same location and with the same size as the text that the bar is representing.

The evaluation apparatus 150 can also use masking flags to identify masked images. For the masked images, the evaluation apparatus 150 can scale the bitmaps to the size of the actual images that were presented based on the size information included with the view data and present the scaled bitmaps in the location in the user interface where the actual images were presented.

The evaluation apparatus 150 can also cause visual presentation of user interactions with the user interface. For example, the user interactions can include a pointer movement, a user click, a user tap, a user swipe, a zoom, a scroll, a focus, or a text entry. For a user swipe, the playback data 140 can include data that represent a path of the swipe over a period of time based on detected touch points in successive frame bundles 129. For example, a sequence of frame bundles can each include a touch event along the line of the swipe, e.g., based on data obtained from UIGestureRecognizer and/or UITapGestureRecognizer classes that detected the touch events. The evaluation apparatus 150 can interpolate the position of the swipe between frames based on the location of the swipe in successive frame bundles 129. For example, a location of a swipe may be at point A in a first frame represented by a first frame bundle and the location of the swipe may be at point B in a second frame immediately following the first frame. In this example, the evaluation apparatus 150 may interpolate the location of the swipe between frames to present the swipe moving from point A to point B. The evaluation apparatus 150 can use Hermite splines to estimate the movement of a swipe of other gestures across the display.

In some implementations, the evaluation apparatus 150 can interpolate other changes to the user interface between frames. For example, the instrumentation module 121 may collect data periodically based on a time period that is greater than a time period between frames during playback. In a particular example, the instrumentation module 121 may collect data and generate a frame bundle five times per second (or at another appropriate rate) and the playback may be presented at ten frames per second. In this example, the evaluation apparatus 150 can interpolate between each pair of successive frames to playback ten frames per second. For example, the evaluation apparatus 150 can interpolate scrolling, swipes, changes in positions/size of presentation objects of the presentation hierarchies, canvas translations, changes in text, and/or other appropriate content.

The evaluation apparatus 150 can use hashes of masked text when interpolating between frames. As the hashes are the same for the same text, the evaluation apparatus 150 can use the hashes to determine if the same text is in the same or different locations on screen in successive frames or included in the same or different views by comparing the hashes to each other. This also allows the evaluation apparatus 150 to track which view is presenting the text.

In some implementations, the evaluation apparatus 150 presents playback data in a web browser environment. In this example, the evaluation apparatus 150 can translate the application's canvas to an HTML canvas. For example, the evaluation apparatus 150 can unpack FlatBuffer-encoded frame bundles to a script (e.g., JavaScript) format before playback. The evaluation apparatus 150 can playback a user session in real time, e.g., in a web browser, so that a customer service representative can view the playback while discussing the user session with a user of the user session.

The evaluation apparatus 150 can also generate session activity data 142 for at least some of the user interactions that occurred during the user session. The session activity data 142 can specify, for example, a list of various user events (e.g., clicks, text entry, icons selected, etc.) that occurred and any environmental data (e.g., accelerometer data) corresponding to the user interaction, e.g., that was collected by the instrumentation module 121 and stored in frame bundles during the user session.

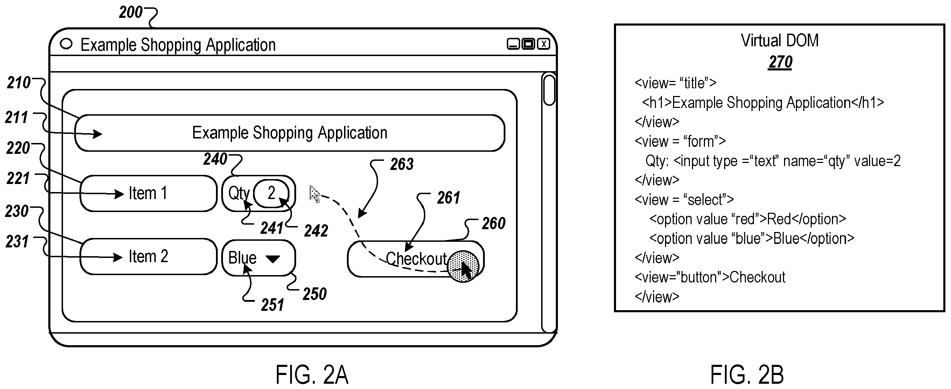

FIG. 2A is an illustration of an example user interface 200 presented during a user session. The user interface 200 is an example shopping application page presented by a native application. The user interface 200 includes a page title 210 with the text 211 ("Example Shopping Application"). The user interface 200 also includes an element 220 with text 221 ("Item 1"), an element 230 with text 231 ("Item 2"), a form 240 with text 241 ("Qty") and a text entry field 242, a drop down menu 250 with a value 251 ("Blue") presented in the menu 250, and a checkout button 260 with text 261 ("Checkout"). As shown by the dashed line 263, the user viewing the user interface focused a cursor on the quantity form 240 and then moved the cursor over the checkout button 260 and selected the checkout button 260.

A user device presenting the user interface 200 can provide data to the evaluation apparatus 150 of FIG. 1, e.g. in the form of frame bundles. In this example, the data would include a view tree specifying the layout and content of views presented at the user interface 200. The data would also include user interaction data specifying the focus of the cursor on the quantity form 240, movement of the cursor to the checkout button 260, and the selection of the checkout button 260.

The data can also include the text presented in the user interface 200 if the views that include the text are whitelisted. In this example, assume that the whitelist for the application developer that developed the user interface 200 is the whitelist 122 of FIG. 1. That is, the whitelist specifies that content within the title, form, and button views are whitelisted.

Referring now to FIG. 2B, which shows a portion of an example virtual DOM 270 for the user interface of FIG. 2A. In particular, the portion of the virtual DOM shows a portion of the language for a title view that defines the title 210, a form view that defines the quantity form 240, a drop down menu view that defines the drop down menu 250, and a button view that defines the checkout button 260. However, the portion of the virtual DOM does not show all of the language that would be included in a virtual DOM for the user interface 200.

As can be seen from the virtual DOM 270, the text 211 of the page title 210 is in the title view. Thus, the text 211 is whitelisted content. Similarly, the text 242 of the quantity form 240 is in the form view and is whitelisted content. In addition, the text 261 of the content button 260 is within the button view and is whitelisted content. As the text 351 of the drop down menu 350 is within a select view, which is not specified by the whitelist 115, the text 351 is not whitelisted content. Thus, in this example, the text 211, the text 242, and the text 261 would be included in the data sent to the evaluation apparatus 150. However, the text 251 would be blocked from the data since the text is not in whitelisted views. Assume for the rest of this example that the text 221 and 231 is also not whitelisted content based on the tags of the HTML document 270 (not shown) that include the text are not specified by the whitelist 115.

FIG. 3 is an illustration of an example interactive interface 300 for replaying a user session. The interactive interface 300 replays the user session with the user interface 200 of FIG. 2A. For example, the evaluation apparatus 150 of FIG. 1 can generate playback of the user session based on the data received from the user device that presented the user interface.

The user interface 300 includes a search field 302 that receives search criteria for identifying sessions. For example, assume that a publisher is interested in identifying and/or viewing sessions during which a user clicked a checkout button 304 of a given website (or native application) can enter the search phrase "clicked checkout" in the search field 302. Upon submission of the search phrase (e.g., inputting and enter command or clicking on a submission button), a request for session information is transmitted to the evaluation apparatus 150, which may include a search apparatus. The request for session information can include, for example, the search phrase, and identity of the publisher requesting the session information, and/or other information that provides context associated with the request.

In response to receiving the request for session information, the evaluation apparatus 150 can use the search phrase "clicked checkout" to identify one or more sessions during which a user clicked the checkout button 304 of the given website. In some implementations, the evaluation apparatus 150 identifies sessions responsive to the search phrase from an index of user sessions. For example, the index may include one or more entries associating the user action "click" and the user interface element "checkout button" with sessions during which a user clicked on the "checkout" button 304.

The evaluation apparatus 150 provides data identifying sessions responsive to the request for session information to the requesting device. In some implementations, the evaluation apparatus 150 can respond to the request for session information by providing data about one or more sessions that were identified based on the search phrase. Continuing with the example above, the evaluation apparatus 150 can provide a list of sessions 308 that were identified from the index based on the search phrase "clicked checkout." As illustrated by FIG. 3, the sessions in which a user clicked a checkout button include Session 1, Session 2, Session 3, Session 4, Session 5, and Session 6.

The evaluation apparatus 150 can also provide playback data and session activity data for one or more of the identified sessions in response to the request for session information. For example, as illustrated by FIG. 3 Session 1 is shaded, indicating that playback data for Session 1 is available for replay, and that session activity data for Session 1 are available for presentation.

The user interface 300 includes a playback region 306 in which previous sessions are replayed based on the playback data. The playback region 306 includes a playback bar, which includes a play/pause portion 310, a counter 312, and a slider portion 314. The play/pause portion 310 enables a publisher to start and stop replay of the session by interacting with the play/pause portion 310. The counter 312 provides a total duration of the session (e.g., 1 minute 50 seconds) and a portion of the session that is currently being presented (e.g., 45 seconds). The slider portion 314 enables a publisher to quickly move to other portions of the session by sliding a sliding element 316 within the slider portion 314. Continuing with the example above, the playback region 306 is replaying Session 1, as indicated by the shading of Session 1 in the list of sessions.

The playback of Session 1 shows a recreation of the user interface 200 of FIG. 2A based on the data received from the user device at which the user session occurred. In particular, the replay shows a page title 310 with text 311 that corresponds to the page title and text 211; an element 320 with a masked element 321 that corresponds to the element 220 and text 221; an element 330 with a masked element 331 that corresponds to the element 320 and text 321, a quantity form 340 with text 341 and text entry field 342 that corresponds to the quantity form 240 with text 24 and text entry field 242; drop down menu 350 with a masked element 351 that corresponds to the drop down menu 250 with text 251; and a checkout button 360 with text 361 that corresponds to the checkout button 260 with text 261.

As the text of the elements 220 and 230 were not whitelisted, this text was not collected and sent to the evaluation apparatus 150. Thus, the evaluation apparatus 150 generated masking elements 321 and 331 to represent the text 221 and 231, respectively. As described above, the masking elements 321 and 331 can be size based on the size of the element that includes the text, namely the elements 220 and 230. In this way, the masking elements 321 and 331 fit within the elements 320 and 330, similar to the text 221 and 231 represented by the masking element 321 and 331. Similarly, the evaluation apparatus 150 included a masking element 351 in place of the text 251 of the drop down menu 350 as the text of the drop down menu 350 was not whitelisted. This masking element 351 is sized based on the size of the text 251 of the drop down menu, e.g., based on a size of rectangle that bounds the text 251 included in the data sent to the evaluation apparatus from the user device. The masking elements can be generated to resemble a wireframe of the application's user interface, e.g., that shows where user interface elements were presented within the user interface and the size of the user interface elements, but without the actual content (e.g., actual text) of the user interface elements.

Some masking elements can include multiple masking elements to represent a string of text. For example, a respective masking element can be used to mask each word in the sentence. When generating a masking element, the evaluation apparatus 150 can start a new masking element at the beginning of each word and end the masking element when it encounters a space or punctuation indicating the end of the word.

The text 311, 341, 342, and 361 is included in the playback as the content of their corresponding user interface elements were whitelisted. In this example, the publisher of the user interface 200 may want to view how the users change the quantities in the quantity form 240 to ensure that the form functions properly and users are able to specify their desired quantities without error or frustration. However, the items being purchased may be considered sensitive information. Thus, the text 221 and 231 that represents the items is not whitelisted and is masked using the masking elements 321 and 331 in the playback of the user session.

The user interface 300 includes a session activity region 370 in which activities that occurred during the session being replayed are presented based on the session activity data. For example, the session activity region 370 presents information such as a time at which the session being replayed occurred (e.g., a day, date, time of day, and/or year), a type of browser that was used to conduct the user session, an Internet Protocol (IP) Address of a device at which the user session occurred, and/or a geographic location of the user device at which the user session occurred. The session activity region 318 can also present a number of activities (e.g., a number of clicks, focuses, page navigations, or other user interactions) that occur during the session.

The session activity region 370 also identifies and/or outlines various activities that occurred during the user session being replayed. For example, the session activity region 370 specifies that, during the session being replayed in the playback region 306 the user navigated to example.com/products 371, focused on a quantity form 340 within the page 372, clicked the checkout button 373, navigated to example.com/checkout 374, and focused on an address box 375. The activities listed in the session activity region 370 can be arranged in the order in which they occur during the session. For example, the activity 371 occurred prior to the activities 372, 373, 374, and 375. Additionally, the activities listed in the session activity region 370 can be visibly represented in a hierarchical manner. For example, each of the activities 372 and 373 are offset to the right relative to the activity 371, thereby indicating that the activities 372 and 373 occurred during the visit to example.com/products 371.

The list of activities 370 can also provide contextual data regarding the activity. For example, activity 372 indicates that the user interaction "focus" occurred with the quantity form 340. The list of activities 370 can also provide information from the structure of the user interface related to each activity. For example, each activity can include information from nodes associated with the activity from a hierarchical representation of the user interface structure (e.g., from a DOM). In a particular example, activity 372 shows a portion of the DOM nodes that provide contextual information about the quantity form 340 (e.g., #header div...). In some implementations, user interaction with the activity 372 will cause presentation of additional contextual information that is not presented in the list of activities 370 (e.g., a full set of DOM nodes that provide information related to the activity).

As replay of the session proceeds in the replay region 306, activity corresponding to the portion of the replay being presented can be highlighted. For example, after the user focuses on the quantity form 340, the user clicked on the checkout button 360. As the replay shows the mouse moving from near the quantity form 340 to the checkout button 360 (as illustrated by the dashed line), the activity 373 can be shaded (or highlighted) indicating the session activity that corresponds to the portion of the session currently being replayed. When the replay of the session reaches a point at which the user clicked the checkout button 360, the playback data can cause a shaded circle 362 to be presented, thereby visually conveying to the publisher that the user click occurred and a location of the user click on the checkout button 360. Similar animations can be used to visually convey to the publisher that other interactions occurred. For example, with reference to a touchscreen device, a similar shaded circle can be used to visually convey the occurrence of a user tap, and elongated shading animation can be used to illustrate a user swipe or other finger movement on the touchscreen.

As discussed above, a publisher can request replay of one of the other sessions (e.g., Session 2) from the user interface 300 (or another user interface). For example, user interaction with (e.g., a click of) Session 2 in the list of sessions 308 can initiate a request for session information about Session 2. In response to the request, the evaluation apparatus 150 can output, to the requesting device, playback data and session activity data related to Session 2. Upon receipt of the playback data and session activity data, the requesting device can replay Session 2 in the replay region 306, and present information about the activities that occurred during Session 2 in the session activity region 318.

In some implementations, the user interface 300 can include a filter element 304. The filter element 304 enables a publisher to filter sessions identified using, for example, the submitted search phrase. For example, a publisher may be interested in identifying only the sessions during which a user clicked on the checkout button 360, but did not ultimately make a purchase. In this example, the user can submit the search phrase "clicked checkout," and interact with the filter element 304 to select a filter that identifies only those sessions during which the user did not make a purchase (e.g., by clicking on a drop-down button and selecting the "did not purchase" option). This enables the publisher to quickly identify sessions of interest, and/or identify what might have prevented these users from making a purchase (e.g., issues with the user interface).

An example filter is provided here for purposes of illustration, but various other filters can be used and specified as desired. For example, publishers may be interested in evaluating only those sessions that were performed in a specific geographic region (e.g. Southeast United States, Central America, Europe) or only those sessions during which a user terminated the session prior to some specified duration (e.g., within 2 minutes). As discussed in more detail below, providing filters such as these and/or analytic information related to sessions identified using filters can provide a publisher with insight regarding how to better format their user interface and/or achieve specific business goals (e.g., increase sales).

In some implementations, the publisher of the user interface 200 can update the whitelist for the user interface 200 by simply interacting with the user interface elements in the playback of a user session. For example, if the publisher decides that it does not need to view the quantity of the item presented in the quantity form 240, the publisher can select the quantity value 342 in the replay region 306. The evaluation apparatus 150 can detect the selection and update the whitelist status of the quantity value 242 of the quantity form 240. In this example, the evaluation apparatus 150 would change the whitelist status of the quantity value 242 to non-whitelisted content, e.g., by removing from the whitelist 120 the "Tag:form; Field: value" that specifies that this value is whitelisted. For subsequent user sessions with the user interface 200, the quantity value 342 would be not be collected and sent to the evaluation apparatus 150. The publisher can add the quantity value 242 back to the whitelist 120 be selecting the value 342 in the playback of Session 1 or another session with the user interface 200.

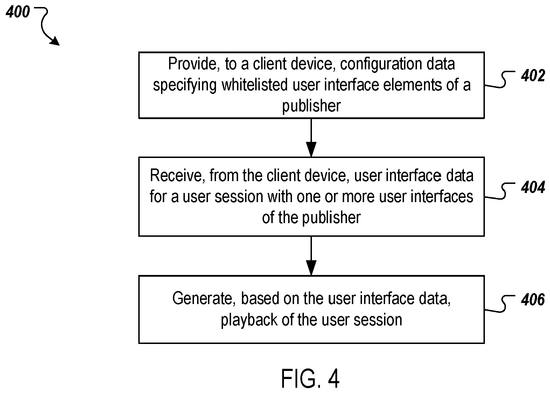

FIG. 4 is a flow chart of an example process 400 for generating and providing an interactive interface that presents playback of a user session. Operations of the process 400 can be performed, for example, by one or more data processing apparatus, such as the evaluation apparatus 150. Operations of the process 400 can also be implemented as instructions stored on a non-transitory computer readable medium. Execution of the instructions cause one or more data processing apparatus to perform operations of the process 400.

Configuration data is provided to a client device (402). The configuration data specifies a set of whitelisted user interface elements of a publisher. Each whitelisted user interface element is a user interface element from which content is eligible to be collected and transmitted from the client device. For example, as described above, the configuration data can specify views or other user interface structure indicators from which whitelisted content can be obtained and sent to an evaluation apparatus.

The configuration data can be sent to the client device in response to the client device loading a user interface of the publisher. For example, an instrumentation module of an application loading the user interface or the user interface itself can be configured to request the configuration data in response to the loading. In this way, the current whitelist is provided to the client device for collecting data to send to the evaluation apparatus.

User interface data is received from the client device (404). The client device can collect the data and send the data to the evaluation apparatus during the user session or at the conclusion of the user session. As described above, the data can include view data specifying a structure of the one or more user interfaces (e.g., a view tree of views used to generate the user interface(s)) presented during the user session and user interaction data specifying user interactions with the one or more user interfaces.

The data can also include content of one or more presented user interface elements that were presented by the one or more user interfaces and (were generated from a view that matches a whitelisted view specified by the configuration data. For example, the application presenting the user interface(s) of the publisher can compare the views to the whitelisted views specified by the configuration data. For matching views, the application can obtain the content of the view and provide the content with the data. For non-matching user interface elements, the application can block the collection of the content of the view and not provide the content. Instead, the application can provide a representation of the content, e.g., a hash of text or a low fidelity version of an image.

Playback of the user session is generated based on the received data (406). The playback of the user session can present the one or more user interfaces viewed during the user session, the content of the one or more user interface elements that match whitelisted user interface element, the user interactions with the one or more user interfaces. For content of the user interface elements that do not match whitelisted user interface elements, the playback can present the user interface element without the content of the user interface element. Instead, the playback can include a masking element that represents the content. As described above, the masking element can be sized based on the content represented by the masking element.

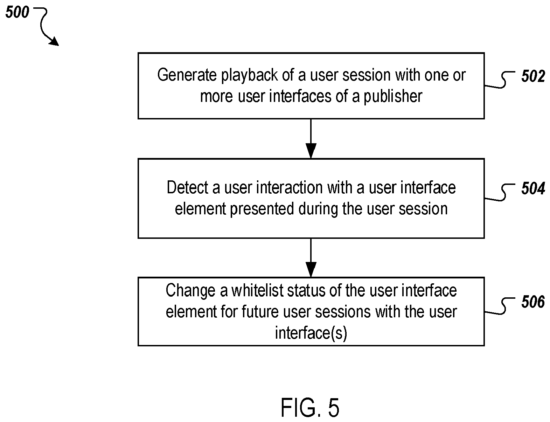

FIG. 5 is a flow chart of an example process 500 for updating a whitelist status of a user interface element. Operations of the process 500 can be performed, for example, by one or more data processing apparatus, such as the evaluation apparatus 150. Operations of the process 500 can also be implemented as instructions stored on a non-transitory computer readable medium. Execution of the instructions cause one or more data processing apparatus to perform operations of the process 500.

In some implementations, no content of a publisher is whitelisted until the publisher adds the content to the whitelist. This ensures that no sensitive data is collected unless requested by the publisher. The publisher can then add content to the whitelist as needed.

Playback of a user session with one or more user interfaces of a publisher is generated (502). The playback can be generated using the process 400 of FIG. 4.

A user interaction with a user interface element presented in the playback is detected (504). For example, a publisher can select a user interface element to change the whitelist status of the content of the user interface element.

The whitelist status of the view that defines the user interface element is changed (506). If the view is currently included in the whitelist for the publisher, the whitelist status of the view can be updated to no longer be whitelisted. For example, the identifier for the view can be removed from the whitelist.

If the view is not currently included in the whitelist for the publisher, the whitelist status of the view can be updated to be whitelisted. For example, the identifier for the view can be added to the whitelist.

The updated whitelist can be provided to client devices when the client devices load a user interface of the publisher. In this way, the updated whitelist is used to collect data for playback of subsequent user sessions.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
providing (402), to a client device, configuration data specifying a set of whitelisted views of a publisher, each whitelisted view being a view from which content is eligible to be collected and transmitted from the client device;
receiving (404), from the client device and for a user session in which a user interacted with one or more user interfaces of the publisher presented by an application, user interface data including
view data specifying, for each user interface of the one or more user interfaces, a hierarchical structure of views used to generate a respective user interface of the one or more user interfaces presented during the user session,
user interaction data specifying user interactions with the one or more user interfaces, and
content of one or more first presented user interface elements that i) were presented by the one or more user interfaces, ii) were generated from a view that matches a whitelisted view specified by the configuration data, and iii) were generated from a view of a respective user interface, wherein the view was not completely obstructed by other views in the respective user interface, wherein the application does not provide content of one or more second presented user interface elements that were generated from a view that does not match a whitelisted view specified by the configuration data; and
generating (406), based on the user interface data, playback of the user session that presents the one or more user interfaces, the content of the one or more first presented user interface elements, the user interactions with the one or more user interfaces, and, for content of the one or more second presented user interface elements, a masking element that represents the content of the one or more second presented user interface elements while masking actual content of the one or more second presented user interface elements.

2. The method of claim 1, wherein the application does not provide content for views that are completely obscured by other views for generating the playback, wherein the views are determined as completely obscured based on size, location, and the hierarchical structure of the views within a user interface.

3. The method of claim 1, wherein the content of a given first presented user interface element comprises text presented by a given user interface of the one or more user interfaces and the masking element for the text comprises a rectangular box that matches a size of a rectangle that bounds the text in the given user interface.

4. The method of claim 1, wherein the content of a given first presented user interface element comprises text presented by a given user interface of the one or more user interfaces and the masking element for the text comprises a rectangular box that having a height based on an ascent of the text.

5. The method of claim 1, wherein the content of a given first presented user interface element comprises an image presented by a given user interface of the one or more user interfaces and the masking element for the image comprises a replacement image having a color that matches a given pixel of the image.

6. The method of claim 1, wherein the content of a given first presented user interface element comprises an image presented by a given user interface of the one or more user interfaces and the masking element for the image comprises a replacement image generated from a sample of pixels of the image, the sample of pixels being fewer than a total number of pixels of the image.

7. The method of claim 1, further comprising:
detecting, during the playback of the user session, a user interaction with a user interface element being presented by at least one of the one or more user interfaces in the playback of the user session; and
in response to detecting the user interaction, changing a whitelist status of a given view used to generate the user interface element, wherein the whitelist status specifies whether the view includes content to be collected from the client device.

8. The method of claim 7, wherein changing the whitelist status of the given view comprises:
whenever the given view is on a whitelist that specifies whitelisted content, removing the given view from the whitelisted content; and
whenever the view is not on the whitelist that specifies the whitelisted content, adding the view to the whitelist.

9. A system comprising:
a data store; and
one or more computers that interact with the data store and execute instructions that cause the one or more computers to perform operations according to the methods of any one of claims 1 to 8.

10. A non-transitory computer readable medium storing instructions that upon execution by one or more computers cause the one or more computers to perform operations according to the methods of any one of claims 1 to 8.

## Patentansprüche

1. Verfahren, das Folgendes umfasst:
Liefern (402) von Konfigurationsdaten, die einen Satz auf eine weiße Liste gesetzter Ansichten eines Herausgebers festlegen, zu einer Client-Vorrichtung, wobei jede auf eine weiße Liste gesetzte Ansicht eine Ansicht ist, aus der Inhalt wählbar ist, um von der Client-Vorrichtung gesammelt und gesendet zu werden;
Empfangen (404) von der Client-Vorrichtung und für eine Anwendersitzung, in der ein Anwender mit einer oder mehreren Anwenderschnittstellen des Herausgebers, die durch eine Anwendung dargestellt werden, interagiert hat, von Anwenderschnittstellendaten, die Folgendes enthalten:
Ansichtsdaten, die für jede Anwenderschnittstelle der einen oder der mehreren Anwenderschnittstellen eine hierarchische Struktur von Ansichten festlegen, die verwendet werden, um eine jeweilige Anwenderschnittstelle der einen oder der mehreren Anwenderschnittstellen, die während der Anwendersitzung dargestellt werden, zu erzeugen,
Anwenderinteraktionsdaten, die Anwenderinteraktionen mit der einen oder den mehreren Anwenderschnittstellen festlegen, und
Inhalt eines oder mehrerer zuerst dargestellter Anwenderschnittstellenelemente, die i) durch die eine oder die mehreren Anwenderschnittstellen dargestellt wurden, ii) aus einer Ansicht erzeugt wurden, die mit einer auf eine weiße Liste gesetzten Ansicht, die durch die Konfigurationsdaten festgelegt wird, übereinstimmt, und iii) aus einer Ansicht einer jeweiligen Anwenderschnittstelle erzeugt wurden, wobei die Ansicht durch weitere Ansichten in der jeweiligen Anwenderschnittstelle nicht vollständig verdeckt war und die Anwendung Inhalt eines oder mehrerer zweiter dargestellter Anwenderschnittstellenelemente, die von einer Ansicht erzeugt wurden, die mit einer auf eine weiße Liste gesetzten Ansicht, die durch die Konfigurationsdaten festgelegt ist, nicht übereinstimmt, nicht liefert; und
Erzeugen (406) auf der Grundlage der Anwenderschnittstellendaten einer Wiedergabe der Anwendersitzung, die die eine oder die mehreren Anwenderschnittstellen, den Inhalt des einen oder der mehreren zuerst dargestellten Anwenderschnittstellenelemente, die Anwenderinteraktionen mit der einen oder den mehreren Anwenderschnittstellen und ein Maskierungselement für Inhalt des einen oder der mehreren zweiten dargestellten Anwenderschnittstellenelemente, das den Inhalt des einen oder der mehreren zweiten dargestellten Anwenderschnittstellenelemente darstellt, während es tatsächlichen Inhalt des einen oder der mehreren zweiten dargestellten Anwenderschnittstellenelemente maskiert, darstellt.

2. Verfahren nach Anspruch 1, wobei die Anwendung zum Erzeugen der Wiedergabe keinen Inhalt für Ansichten liefert, die durch weitere Ansichten vollständig verdeckt sind, wobei die Ansichten auf der Grundlage der Größe, des Orts und der hierarchischen Struktur der Ansichten in einer Anwenderschnittstelle als vollständig verdeckt bestimmt werden.

3. Verfahren nach Anspruch 1, wobei der Inhalt eines gegebenen ersten dargestellten Anwenderschnittstellenelements Text umfasst, der durch eine gegebene Anwenderschnittstelle der einen oder der mehreren Anwenderschnittstellen dargestellt wird, und das Maskierungselement für den Text einen rechteckigen Kasten umfasst, der mit einer Größe eines Rechtecks übereinstimmt, das den Text in der gegebenen Anwenderschnittstelle begrenzt.

4. Verfahren nach Anspruch 1, wobei der Inhalt eines gegebenen ersten dargestellten Anwenderschnittstellenelements Text umfasst, der durch eine gegebene Anwenderschnittstelle der einen oder der mehreren Anwenderschnittstellen dargestellt wird, und das Maskierungselement für den Text einen rechteckigen Kasten umfasst, der eine Höhe auf der Grundlage eines Anstiegs des Texts besitzt.

5. Verfahren nach Anspruch 1, wobei der Inhalt eines gegebenen ersten dargestellten Anwenderschnittstellenelements ein Bild umfasst, das durch eine gegebene Anwenderschnittstelle der einen oder der mehreren Anwenderschnittstellen dargestellt wird, und das Maskierungselement für das Bild ein Austauschbild umfasst, das eine Farbe aufweist, die mit einem gegebenen Pixel des Bilds übereinstimmt.

6. Verfahren nach Anspruch 1, wobei der Inhalt eines gegebenen ersten dargestellten Anwenderschnittstellenelements ein Bild umfasst, das durch eine gegebene Anwenderschnittstelle der einen oder der mehreren Anwenderschnittstellen dargestellt wird, und das Maskierungselement für das Bild ein Austauschbild umfasst, das aus einer Probe von Pixeln des Bilds erzeugt wird, wobei die Probe von Pixeln weniger als eine Gesamtanzahl von Pixeln des Bilds ist.

7. Verfahren nach Anspruch 1, das ferner Folgendes umfasst:
Detektieren während der Wiedergabe der Anwendersitzung einer Anwenderinteraktion mit einem Anwenderschnittstellenelement, das in der Wiedergabe der Anwendersitzung durch mindestens eine der einen oder der mehreren Anwenderschnittstellen dargestellt wird; und
Ändern in Reaktion auf ein Detektieren der Anwenderinteraktion des Status einer weißen Liste einer gegebenen Ansicht, die verwendet wird, um das Anwenderschnittstellenelement zu erzeugen, wobei der Status der weißen Liste festlegt, ob die Ansicht einen Inhalt enthält, der von der Client-Vorrichtung gesammelt werden soll.

8. Verfahren nach Anspruch 7, wobei das Ändern des Status der weißen Liste der gegebenen Ansicht Folgendes umfasst:
Entfernen dann, wenn die gegebene Ansicht sich auf einer weißen Liste, die einen auf eine weiße Liste gesetzten Inhalt festlegt, befindet, der gegebenen Ansicht aus dem auf eine weiße Liste gesetzten Inhalt und
Hinzufügen dann, wenn die Ansicht sich nicht auf der weißen Liste, die den auf eine weiße Liste gesetzten Inhalt festlegt, befindet, der Ansicht zur weißen Liste.

9. System, das Folgendes umfasst:
einen Datenspeicher und
einen oder mehrere Computer, die mit dem Datenspeicher interagieren und Befehle ausführen, die verursachen, dass der eine oder die mehreren Computer Operationen gemäß den Verfahren nach einem der Ansprüche 1 bis 8 durchführen.

10. Nichttransitorisches computerlesbares Medium, das Befehle speichert, die bei einer Ausführung durch einen oder mehrere Computer den einen oder die mehreren Computer veranlassen, Operationen gemäß den Verfahren nach einem der Ansprüche 1 bis 8 durchzuführen.

## Revendications

1. Procédé comprenant :
la fourniture (402), à un appareil client, de données de configuration spécifiant un ensemble de vues sur liste blanche d'un éditeur, chaque vue sur liste blanche étant une vue dont le contenu est éligible pour être recueilli et transmis depuis l'appareil client ;
la réception (404), en provenance de l'appareil client et pour une session utilisateur dans laquelle un utilisateur a interagi avec une ou plusieurs interfaces utilisateur de l'éditeur présentées par une application, de données d'interface utilisateur comprenant :
des données de vues spécifiant, pour chaque interface utilisateur parmi la ou les interfaces utilisateur, une structure hiérarchique des vues utilisées pour générer une interface utilisateur respective parmi la ou les interfaces utilisateur présentées pendant la session utilisateur,
des données d'interactions des utilisateurs spécifiant des interactions des utilisateurs avec la ou les interfaces utilisateur, et
le contenu d'un ou de plusieurs premiers éléments d'interface utilisateur présentés qui i) ont été présentés par la ou les interfaces utilisateur, ii) ont été générés à partir d'une vue qui correspond à une vue sur liste blanche spécifiée par les données de configuration, et iii) ont été générés à partir d'une vue d'une interface utilisateur respective, cette vue n'ayant pas été masquée complètement par d'autres vues dans l'interface utilisateur respective, l'application ne fournissant pas le contenu d'un ou de plusieurs deuxièmes éléments d'interface utilisateur présentés qui ont été générés à partir d'une vue qui ne correspond pas à une vue sur liste blanche spécifiée par les données de configuration ; et
la génération (406), en se basant sur les données d'interfaces utilisateur, de la lecture de la session utilisateur qui présente la ou les interfaces utilisateur, le contenu du ou des premiers éléments d'interface utilisateur présentés, les interactions des utilisateurs avec la ou les interfaces utilisateur, et, pour le contenu du ou des deuxièmes éléments d'interface utilisateur présentés, un élément de masquage qui représente le contenu du ou des deuxièmes éléments d'interface utilisateur présentés tout en masquant le contenu réel du ou des deuxièmes éléments d'interface utilisateur présentés.

2. Procédé selon la revendication 1, dans lequel l'application ne fournit pas de contenu pour des vues qui sont complètement masquées par d'autres vues pour générer la lecture, ces vues étant déterminées comme complètement masquées en se basant sur la taille, l'emplacement et la structure hiérarchique des vues à l'intérieur d'une interface utilisateur.

3. Procédé selon la revendication 1, dans lequel le contenu d'un premier élément d'interface utilisateur présenté donné comprend un texte présenté par une interface utilisateur donnée parmi la ou des interfaces utilisateur et dans lequel l'élément de masquage pour le texte comprend une zone rectangulaire qui correspond à une taille d'un rectangle qui limite le texte dans l'interface utilisateur donnée.

4. Procédé selon la revendication 1, dans lequel le contenu d'un premier élément d'interface utilisateur présenté donné comprend un texte présenté par une interface utilisateur donnée parmi la ou les interfaces utilisateur et dans lequel l'élément de masquage pour le texte comprend une zone rectangulaire qui a une hauteur basée sur une montée du texte.

5. Procédé selon la revendication 1, dans lequel le contenu d'un premier élément d'interface utilisateur présenté donné comprend une image présentée par une interface utilisateur donnée parmi la ou les interfaces utilisateur et dans lequel l'élément de masquage pour l'image comprend une image de remplacement ayant une couleur qui correspond à un pixel donné de l'image.

6. Procédé selon la revendication 1, dans lequel le contenu d'un premier élément d'interface utilisateur présenté donné comprend une image présentée par une interface utilisateur donnée parmi la ou les interfaces utilisateur et dans lequel l'élément de masquage pour l'image comprend une image de remplacement générée à partir d'un échantillon de pixels de l'image, cet échantillon de pixels étant plus petit qu'un nombre total de pixels de l'image.

7. Procédé selon la revendication 1, comprenant en outre :
la détection, pendant la lecture de la session utilisateur, d'une interaction d'utilisateur avec un élément d'interface utilisateur étant présenté par au moins une interface parmi la ou les interfaces utilisateur lors de la lecture de la session utilisateur ; et
en réponse à la détection de l'interaction de l'utilisateur, le changement d'un état de liste blanche d'une vue donnée utilisée pour générer l'élément d'interface utilisateur, cet état de liste blanche spécifiant si la vue comprend ou pas le contenu devant être recueilli depuis l'appareil client.

8. Procédé selon la revendication 7, dans lequel le changement de l'état de la liste blanche de la vue donnée comprend :
chaque fois que la vue donnée est sur une liste blanche qui spécifie le contenu sur la liste blanche, l'enlèvement de la vue donnée du contenu sur la liste blanche ; et
chaque fois que la vue n'est pas sur la liste blanche qui spécifie le contenu sur la liste blanche, l'addition de la vue à la liste blanche.

9. Système comprenant :
un magasin de données ; et
un ou plusieurs ordinateurs qui interagissent avec le magasin de données et qui exécutent des instructions qui font que le ou les ordinateurs exécutent des opérations conformément aux procédés selon l'une quelconque des revendications 1 à 8.

10. Support non transitoire lisible par ordinateur stockant des instructions qui, lors de leur exécution par le ou les ordinateurs, font que le ou les ordinateurs exécutent des opérations conformément aux procédés selon l'une quelconque des revendications 1 à 8.
